# EUROPEAN PATENT SPECIFICATION

(11) **EP 4 439 743 B1**
(45) Date of publication and mention of the grant of the patent: **29.04.2026**
(21) Application number: 24166107.3
(22) Date of filing: 26.03.2024
(51) Int. Cl.: H01M 8/04701, H01M 8/04537, H01M 8/04992, H01M 8/04029, B60L 58/33, H01M 8/0432, H01M 8/04746

(54) **HEAT MANAGEMENT IN A FUEL CELL SYSTEM**
WÄRMEMANAGEMENT IN EINEM BRENNSTOFFZELLENSYSTEM
GESTION DE CHALEUR DANS UN SYSTÈME DE PILE À COMBUSTIBLE

(30) Priority: 28.03.2023 SE 2350358
(43) Date of publication of application: 02.10.2024
(73) Proprietor: VOLVO TRUCK CORPORATION, 405 08 Göteborg (SE)
(72) Inventor: HINDI, Gustavo, 449 50 Alafors (SE); BLOMGREN, Fredrik, 425 35 Kärra (SE); ANDERSSON, Arne, 435 42 Mölnlycke (SE)
(74) Representative: Valea AB

(56) References cited:
- US-A1- 2018 111 504
- US-A1- 2019 165 396
- US-A1- 2022 306 128

## Description

### TECHNICAL FIELD

The disclosure relates generally to heat management in a fuel cell system in a fuel cell vehicle or a stationary system.

The disclosure can be applied in heavy-duty vehicles, such as trucks, buses, and construction equipment, as well as in gensets.

### BACKGROUND

A fuel cell is an electro-chemical device that includes an electrolyte sandwiched between two electrodes such as an anode and a cathode. Solid polymer electrolyte fuel cells, which employ a proton exchange, solid polymer membrane electrolyte, electrochemically convert reactants - fuel (such as hydrogen) received at the anode or anode side, and oxidant (such as oxygen or air) received at the cathode or cathode side, to generate electric power. Two or more fuel cells are usually arranged together into a fuel cell stack, in order to provide a higher output voltage. One or more fuel cell stacks may form a fuel cell system. Proton exchange membrane (PEM) fuel cells are considered well suitable for vehicular applications as well as for stationary applications employing fuel cell systems.

Maintaining an appropriate temperature of a fuel cell system is important for the performance of the fuel cell system. A cooling system is thus a key component that affects the fuel cell performance, reliability and durability.

A fuel cell system has a relatively high efficiency, such as from about 50% to 60%. However, at increased current densities, i.e. higher electrical power, the efficiency drops, increasing the amount of heat produced in the fuel cell system, such that some of the heat is wasted. The wasted or waste heat generated by the fuel cell system is handled by the cooling system, which however may not have efficiency adequate for managing the waste heat. Also, in a fuel cell vehicle, there may be space constraints, while the cooling system requires space for heat exchanger area.

U.S. Patent Application No. 2018/0111504 relates to a monitoring device of a fuel cell, a control device of a fuel cell, and a monitoring method of a fuel cell that can predict temperature change of a refrigerant of a fuel cell. A temperature rise suppressing process of suppressing a temperature rise of the fuel cell is started before a temperature rise start time at which the predicted temperature starts increasing to the maximum value when the predicted temperature and the determination result are acquired. The temperature rise suppressing process may include a process of decreasing a target temperature of the refrigerant, a process of increasing a back pressure on a cathode side of the fuel cell, and a process of increasing a target state of charge of a secondary battery that complements an amount of generated power of the fuel cell in comparison with a case in which the temperature rise suppressing process is not performed.

U.S. Patent Application No. 2019/0165396 relates to systems and methods for determining a temperature rate of change corresponding to a desired rate of temperature change of a fuel cell. The temperature rate of change is controlled to ensure that the current temperature is sufficiently high to provide the amount of power that is requested. The temperature rate of change at both an inlet and an outlet of a stack of fuel cells is controlled, thus ensuring that a temperature differential between the two is at an acceptable level during critical times.

U.S. Patent Application No. 2022/0306128 relates to predicting a future increase in power demand on a fuel cell based on route data associated with a vehicle powered by the fuel cell and reduce an operating temperature of the fuel cell prior to the future increase in power demand.

Various methods have been proposed for cooling the fuel cell system and to handle waste heat. However, a need remains for improved methods for controlling the cooling of the fuel cell system in a fuel cell vehicle or in a stationary fuel cell system.

### SUMMARY

Aspects of the present disclosure relate to control of a cooling system of a fuel cell vehicle in a manner that takes into consideration one or more sources of heat in the fuel cell system, and aim at reducing heat at the one or more sources. Thus, the heat load in the cooling system of the fuel cell vehicle is reduced.

In an aspect, a fuel cell vehicle according to claim 1 is provided.

The processing circuitry of the control system is configured to determine an optimal value for the target coolant inlet temperature, in the manner that minimizes a duration of time during which the target temperature is different from the first target temperature level. For example, responsive to an increase in the power demand from the fuel cell system, e.g. during a hill climbing by the vehicle or in anticipation of the hill climbing, the control system may determine to what degree to increase the target coolant inlet temperature, and for what duration of time, so that a value of one or more parameters of the plurality of parameters related to operation of the fuel cell system is optimized. Thus, the control system is configured to both optimize the duration of time during which the target temperature is different from the first target temperature level and the value of the one or more parameters of the plurality of parameters related to operation of the fuel cell system.

The technical benefits include an overall reduction in the load on the cooling system of the fuel cell vehicle. The target coolant inlet temperature may be controlled as a function of fuel system net power and cooling capacity of a cooling system. Thus, by increasing the target coolant inlet temperature responsive to an increase in required power, demand on the cooling system may be reduced such that less auxiliary power will also be required by the cooling system, which thereby improves a net power usage. Another benefit may be that, since it is possible to reduce required auxiliary power required by the cooling system, e.g., during a normal operation of the vehicle, overall fuel consumption by the vehicle may be reduced.

In some examples, the processing circuitry of the control system may be configured to, responsive to the value of the power output being above a threshold level, reversibly increase the value of the target coolant inlet temperature to a third target temperature level, wherein the third target temperature level is above the first target temperature level and below the second target temperature level or the third target temperature level is equal to the second target temperature level.

In some examples, the value of the power output of the fuel cell system is a predicted value of the power output of the fuel cell system. In some examples, the predicted value is obtained based on data on a route assigned to the vehicle.

In some examples, the processing circuitry of the control system may be configured to optimize the duration of time during which the value of the target temperature is different from the first target temperature level by using a cost function model, and wherein the processing circuity is configured to apply the cost function model to minimize the duration of time during which the target temperature is different from the first target temperature level, while optimizing a value of at least one parameter of the plurality of parameters related to operation of the fuel cell system.

The processing circuitry of the control system is configured to control an air pressure at a cathode of the fuel cell stack as the value of the target coolant inlet temperature is adjusted. In particular, the air pressure at the cathode, or a cathode air pressure, is increased as the target coolant inlet temperature is increased.

In some examples, the plurality of parameters related to operation of the fuel cell system comprise one or more out of a level of degradation of the fuel cell system, fuel consumption by the fuel cell system, an auxiliary load, efficiency of the fuel cell system, power of the fuel cell stack, and a state of charge (SoC) of an electrical storage system (ESS) of the fuel cell vehicle.

In some examples, the first target temperature level comprises 60 °C and the second target temperature level comprises 80 °C. In some examples, the first target temperature level comprises 60 °C and the second target temperature level comprises 75 °C. In some examples, the first target temperature level comprises 60 °C and the second target temperature level comprises 70 °C.

In an aspect, a method of operating a fuel cell system comprising a fuel cell stack is provided according to claim 6.

The technical benefits, as also discussed above, include an overall reduction in the load on the cooling system of the fuel cell vehicle. This leads to a reduced load on one or more auxiliary devices that operate as part of the cooling system, thereby reducing overall fuel consumption by the vehicle. Thus, fuel efficiency may be increased. As a further benefit, overall reduction in the heat load on the cooling system may be performed in the manner that reduces degradation of the fuel cell system thereby increasing its reliability, performance, and lifetime.

In some examples, the method further comprises, responsive to the value of the power output being above a threshold level, reversibly increasing the value of the target coolant inlet temperature to a third target temperature level, wherein the third target temperature level is above the first target temperature level and below the second target temperature level or the third target temperature level is equal to the second target temperature level.

In some examples, in the method, the value of the power output of the fuel cell system is a predicted value of the power output of the fuel cell system. In some examples, the predicted value is obtained based on data on a route assigned to the vehicle.

In some examples, the method further comprises optimizing the duration of time during which the target temperature is different from the first target temperature level by using a cost function model, and wherein the method comprises applying the cost function model to minimize the duration of time during which the target temperature is different from the first target temperature level, while optimizing the value of the one or more parameters of the plurality of parameters related to operation of the fuel cell system.

The method further comprises controlling an air pressure at a cathode of the fuel cell stack as the value of the target coolant inlet temperature is adjusted. In particular, the air pressure at the cathode, or a cathode air pressure, is increased as the target coolant inlet temperature is increased.

In some examples, the plurality of parameters related to operation of the fuel cell system comprise one or more out of a level of degradation of the fuel cell system, fuel consumption by the fuel cell system, an auxiliary load, efficiency of the fuel cell system, power of the fuel cell stack, and a state of charge (SoC) of an electrical storage system (ESS) of the fuel cell vehicle.

In some examples, the first target temperature level comprises 60 °C and the second target temperature level comprises 80 °C, or the first target temperature level comprises 60 °C and the second target temperature level comprises 75 °C.

In some examples, obtaining the value of power output of the fuel cell system comprises determining the value of power output of the fuel cell system.

According to an aspect of the disclosure, a control system for controlling the fuel cell system of the fuel cell vehicle is provided. The control system comprises processing circuitry configured to perform a method in accordance with any one or more examples of the present disclosure.

According to an aspect of the disclosure, a fuel cell vehicle comprising the control system is provided.

According to an aspect of the disclosure, a fuel cell system of a fuel cell vehicle comprising the control system is provided.

According to an aspect of the disclosure, a computer program product is provided that comprises instructions, which, when executed by processing circuitry, cause the processing circuitry to perform a method in accordance with any one or more examples of the present disclosure.

According to an aspect of the disclosure, a computer-readable storage medium is provided. The computer-readable storage medium has stored thereon a computer program product comprising instructions which, when executed by processing circuitry, cause the processing circuitry to perform a method in accordance with any one or more examples of the present disclosure.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a vehicle comprising a fuel cell system in which a method in accordance with an example of aspects of the present disclosure may be implemented.
**FIG. 2** is a block diagram illustrating a fuel cell system and a control system of the vehicle of FIG. 1, in accordance with an example.
**FIG. 3** is a diagram illustrating sources of heat in a fuel cell system.
**FIGs. 4A****,** **4B****,** and **4C** are Sankey diagrams showing examples of energy flow and heat sources in a fuel cell system, for target coolant inlet temperatures 60 °C (FIG. 4A), 65 °C (FIG. 4B), and 70 °C (FIG. 4C).
**FIG. 5** depicts graphs illustrating heat transfer to a cathode of a fuel cell system, for target coolant inlet temperatures 60 °C, 65 °C, and 70 °C, respectively, in accordance with an example.
**FIG. 6A** depicts graphs illustrating an example of a relation between traction power of a fuel cell vehicle and a cooling capacity of a cooling system of the fuel cell vehicle, for ambient temperatures ("Tamb") 20 °C, 30 °C, and 40 °C, respectively, in accordance with an example.
**FIG. 6B** depicts graphs illustrating an example of a relation between a cooling system consumption and a cooling capacity of a cooling system of a fuel cell vehicle, for ambient temperatures ("Tamb") 20 °C, 30 °C, and 40 °C, respectively, in accordance with an example.
**FIG. 7** is a flowchart illustrating a method of controlling a fuel cell system of a fuel cell vehicle, in accordance with an example.
**FIG. 8** illustrates graphs showing a heat transfer rate to coolant as a function of a current density, for target coolant inlet temperatures 60 °C, 65 °C, 70 °C, 75 °C, and 80 °C, respectively, in accordance with an example.
**FIGs. 9A** and **9B** are schematic block diagrams illustrating examples of a control system of a fuel cell vehicle, in accordance with an example.

### DETAILED DESCRIPTION

Today most of the solutions aim at dissipating the heat rejected by a fuel cell system by designing cooling systems with very extensive front face areas, or with a multitude of heat exchangers in various types of arrangements. The aspects of the present disclosure however aim at reducing heat produced by one or more heat sources, thereby addressing a source of the heat generated in the course of operation of a fuel cell system, e.g., in a fuel cell vehicle.

The method and system of the present disclosure employ a control strategy with active control of a target coolant inlet temperature as a function of application demand for fuel efficiency or net system power output. The presented control strategy may involve controlling the target coolant inlet temperature as a function of a fuel system net power and cooling capacity of a cooling system of the fuel cell system. Thus, in situations where more power is required, by increasing the target coolant inlet temperature, less demand may be put on the cooling system, such that auxiliary power required by the cooling system will decrease, which thereby improves a net power usage. Furthermore, due to the reduced power requirements from auxiliary components required for cooling, overall fuel consumption by the vehicle may be reduced.

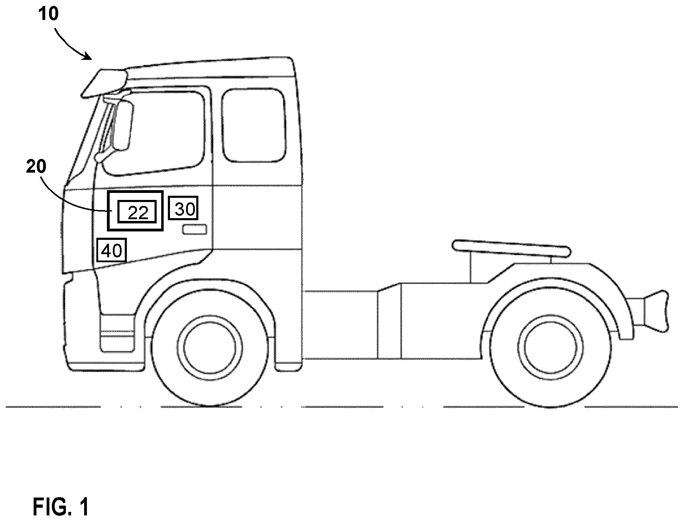

**FIG. 1** depicts a side view of a vehicle 10 according to an example of the present disclosure. The vehicle 10 is shown as a truck, such as a heavy-duty truck for towing one or more trailers (not shown). The vehicle 10 may be a fuel cell electric vehicle (FCEV) or a hybrid vehicle. It should be appreciated that the present disclosure is not limited to any other specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the vehicle 10 comprises a fuel cell system 20. The fuel cell system 20 may be used for powering one or more electric drive motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's mechanical power to another piece of equipment. The vehicle 10 may include or be coupled to or associated with one or more PTO devices.

The fuel cell system 20 comprises two or more fuel cells which together form a fuel cell stack 22 as shown schematically in FIG. 1. In examples herein, the fuel cell system 20 may comprise multiple fuel cell stacks 22, and any mention of the fuel cell stack 22 applies to two or more fuel cell stacks. The fuel cell system 20 is arranged to provide the fuel cells with necessary supply of hydrogen fuel (H₂) and air, cooling, heating, etc. The fuel cell system 20 may include various components which are not shown herein. The fuel cell system 20 may comprise multiple fuel cell systems, and each fuel cell system may comprise its own control system, which may be communicatively connected to a controller or control unit.

The fuel cell system 20 may comprise a single fuel cell system, two fuel cell systems, or more than two fuel cell systems, such as three or more fuel cell systems. Furthermore, when several fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state. Two fuel cell systems may in some cases be controlled in dependence on one another, such that one of the fuel cell systems is controlled to an on-state or an off-state in dependence on the state of the other fuel cell system(s).

The vehicle 10 further comprises a control device or control system 30 according to an example of the present disclosure. The control system 30 may be used for controlling the fuel cell system 20. Even though an on-board control system 30 is shown, it shall be understood that the control system 30 may also be a remote control system, i.e. an off-board control system, or a combination of an on-board and off-board control system or systems. The control system 30 may be configured to control the fuel cell system 20 by issuing control signals and by receiving status information relating to the fuel cell system 20. The control system 30 may be configured to receive information from various sensors, including one or more of temperature sensors, moisture sensors, and other sensors included in or associated with the fuel cell system 20 and/or the vehicle 10. For example, one or more temperature sensors may be positioned such that they can acquire measurements of a temperature of the fuel cell system 20. Various sensors may acquire measurements regarding operation of components of the fuel cell system 20. For example, a temperature sensor may measure an inlet coolant temperature of a cooling system of the fuel cell system 20.

The control system 30 may also be communicatively coupled to an internal database, an external database, or a combination thereof, to receive data related to a route traveled or to be traveled by the vehicle. The data related to the route may include an start point, an end point, and a path traveled by the vehicle 10 between the start and end points. The control system 30 may store and/or may have access to data related to the route including terrain information, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on predicted weather conditions, and other types of data. The control system 30 may have data on a vehicle current location.

The system 30 is an electronic control unit and may comprise processing circuitry which is adapted to execute a computer program such as computer-executable instructions to perform a method according to aspects of the present disclosure. The control system 30 may comprise hardware and/or software for performing the method according to aspects of the present disclosure. The control system 30 may be denoted a computer. The control system 30 may be constituted by one or more separate sub-units, and the control system 30 may communicate by use of wired and/or wireless communication technology.

As shown in FIG. 1, the vehicle 10 comprises an electrical storage system (ESS) 40 such as e.g. one or more batteries and/or one or more supercapacitors for storing electric energy, including excess electric energy produced by the fuel cell system 20. The ESS 40 may store energy regenerated during braking such as regenerative braking, and/or it may be configured for charging by a charger, such as, e.g., from an external power grid. The ESS 40 is configured to assist the fuel cell system 20 in supplying energy to the drive motor, to meet power/energy demands of the vehicle 10. The ESS 40 may be configured to provide additional propulsive power in situations when the complete required power cannot be provided by fuel cell system 20, or when it is not suitable to provide the complete required power by the fuel cell system 20. In various examples, the ESS 40 may provide electrical energy storage during regenerative braking, provide electrical energy storage for electrical energy that is generated from a fuel cell system at low loads, assist the fuel cell system 20 with generating power at higher loads, or may serve as a main energy supplier in some circumstances. The fuel cell system 20 and the ESS 40 can provide power to one or more auxiliary systems of the vehicle 10.

The vehicle 10 may also comprise various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts and marine vehicles. The present disclosure may also be applied in vessels and in stationary applications, such as in grid-connected supplemental power generators or in grid-independent power generators.

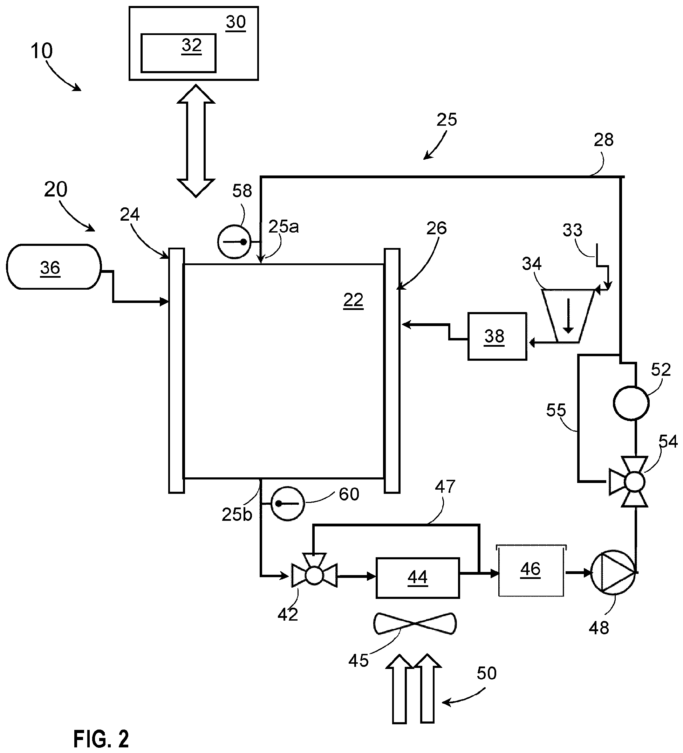

**FIG. 2** further illustrates an example of fuel cell system 20 in the vehicle 10. As shown, the fuel cell system 20 comprises a fuel cell stack 22 comprising an anode side or anode 24, a cathode side or cathode 26, and an electrolyte (not shown) such as e.g. a proton exchange membrane (PEM) sandwiched between the anode 24 and the cathode 26. The fuel cell stack 22, which may comprise two or more stacks, is configured to generate power through a chemical reaction by receiving the air and hydrogen.

The anode 24 receives fuel such as hydrogen that can be supplied from a hydrogen storage device 36 e.g. a hydrogen container or tank that may be refillable and/or replaceable. Any suitable source of hydrogen can be used.

The cathode 26 receives air from the ambient environment, as shown by a line 33. The ambient air may be filtered, pressurized by an air compressor 34, and humidified by a humidifier 38. The air compressor 34 may be electrically driven. In some examples, the air compressor 34 may be an electric turbocharger (ETC) comprising a turbine and compressor.

As shown in FIG. 2, the vehicle 10, e.g., the fuel cell system 20, comprises a cooling system 25 configured to dissipate heat produced as a byproduct of operation of the fuel cell system 20, including the chemical reaction in the fuel cell stack 22.

In the example shown in FIG. 2, the cooling system 25 comprises a cooling circuit 28 configured to regulate the temperature of the fuel cell system 22 such as to dissipate the heat generated in the electrochemical reaction. The cooling circuit 28 circulates a coolant, such that the coolant flows into the fuel cell stack 22 via a coolant inlet 25a and flows out of the fuel cell stack 22 via a coolant outlet 25b. The cooling circuit 28 is also configured to cool down a supplied air. As shown in FIG. 2, the cooling circuit 28 comprises a radiator 44, a coolant tank 46 for storing the coolant, a pump 48 circulating the coolant, and a heater 52. The radiator 44 is configured and arranged so as to cool down the fuel cell stack 22. The radiator 44 may be in the form of a heat discharger that discharges heat to the outside environment by exchanging heat between the coolant and the outside environment i.e. external air schematically shown by arrows 50. The radiator 44 includes or is associated with a heat exchanger fan 45, also referred to herein as a fan or a blower, that is configured to operate to supply cooling air to the radiator 44 and dissipate heat, to thereby regulate a temperature of the coolant. A bypath valve 42 is controlled to allow the coolant to flow to a bypass passage 47 through which the coolant flows by bypassing the radiator 44. A bypath valve 54 is controlled to allow the coolant to flow to a bypass passage 55 through which the coolant flows by bypassing the heater 52.

As further shown in FIG. 2, the cooling system 25 comprises a temperature control sensor 58 configured to measure a coolant temperature at the coolant inlet 25a of the fuel cell stack 22 and a temperature control sensor 60 configured to measure a coolant temperature at the coolant outlet 25b of the fuel cell stack 22. The cooling system 25 may include other temperature control sensors that can be positioned at various locations in the system 25.

The control system 30 is configured to control the fuel cell system 20, e.g. the cooling system 25, such that the coolant temperature at the coolant inlet 25a is set at a target temperature, also referred to herein as a target coolant inlet temperature. In some examples, as a value of a power output from the fuel cell system 20, indicating a power demand on the fuel cell system 20, varies, the control system 30 may adjust a value of the target coolant inlet temperature so that the coolant temperature at the coolant inlet 25a is adjusted to conform to the target coolant inlet temperature set by the control system 30. The control system 30 may control the cooling system 25 to increase or decrease the target coolant inlet temperature, such that the cooling system 25 may be controlled to allow the target coolant inlet temperature to be increased or decreased.

The heater 52 may be used, e.g, in start-up conditions in cold climates or in other situations. In some implementations, the heater may be absent, and, e.g. a power of operation of the heat exchanger fan 45 may be controlled to adjust the coolant temperature at the coolant inlet 25a in accordance with the target coolant inlet temperature set by the control system 30. In some examples, regardless of whether or not the heater 52 is present, the coolant can be let to increase its temperature by, for example, reducing a speed of the heat exchanger fan 45.

It should be appreciated that the structure of the fuel cell system 20, including the cooling system 25, is shown in FIG. 2 as an example, since components may be arranged in other ways, and additional or alternative components can be included in the cooling system 25. For example, more than one heat exchanger fan and/or more than one pump may be employed. Regardless of the specific implementation of the fuel cell stack 22 and the cooling system 25, a temperature of the coolant circulating through the cooling circuit 28 can be decreased or increased in dependence on the control performed by the control system 30. The control system 30 comprises processing circuitry 32 and the processing circuitry 32 is configured to perform control of the cooling system 25 such that the coolant temperature at the coolant inlet 25a is at a desired, or target temperature level. In some examples, a coolant mass flow may be measured to measure an actual heat load onto the coolant.

In the fuel cell system, the heat sources generate heat as a consequence of the various voltage losses. Various sources in the fuel cell vehicle may produce heat, also referred to herein as a waste heat, generated due to operation of the fuel cell system and the vehicle, including, e.g., transport loss heat source, reaction heat source, open circuit voltage (OCV) loss heat source, Ohmic loss heat source, activation loss heat source, and heat transfer due to condensation in the cathode.

In the present disclosure, the target temperature of the coolant at the coolant inlet of the fuel cell stack is adjusted to regulate one or more heat sources. As mentioned above, existing solutions for cooling fuel cell systems typically aim at handling the heat rejected by the fuel cell system by designing cooling systems with extensive front face areas, or with multiple heat exchangers in various types of arrangements. In contrast, the methods in accordance with examples of the present disclosure employ a technique that reduces an amount of heat generated by the heat sources in the fuel cell system, rather than only focusing on designing a cooling system capable of cooling of the waste heat.

Accordingly, a method is provided that comprises adjusting a target coolant inlet temperature of a coolant at a coolant inlet of the fuel cell system between a first target temperature level and a second target temperature level, in dependence on a power demand from the fuel cell system during operation of the fuel cell vehicle. The method may use a model e.g. a cost function model that is adapted to optimize a duration of time during which the target coolant inlet temperature is different from the first target temperature level, based on values of a plurality of parameters related to operation of the fuel cell system.

In some examples, the first target temperature level may be 60 °C, and the second target temperature level may be 80 °C. In some examples, the first target temperature level may be 60 °C, and the second target temperature level may be 75 °C. The target coolant inlet temperature may be adjusted depending on the power demand from the fuel cell system, which may depend on various factors. For example, as the fuel cell vehicle is approaching a steep hill in a traveled route and the power demand from the fuel cell system increases, the target coolant inlet temperature may be controlled to increase to thereby decrease condensation at a cathode of a fuel cell stack of the fuel cell system. The target coolant inlet temperature may be controlled to increase for a certain duration of time, so that the increase in the target coolant inlet temperature is balanced with a change in a value of a parameter from plurality of parameters related to operation of the fuel cell system.

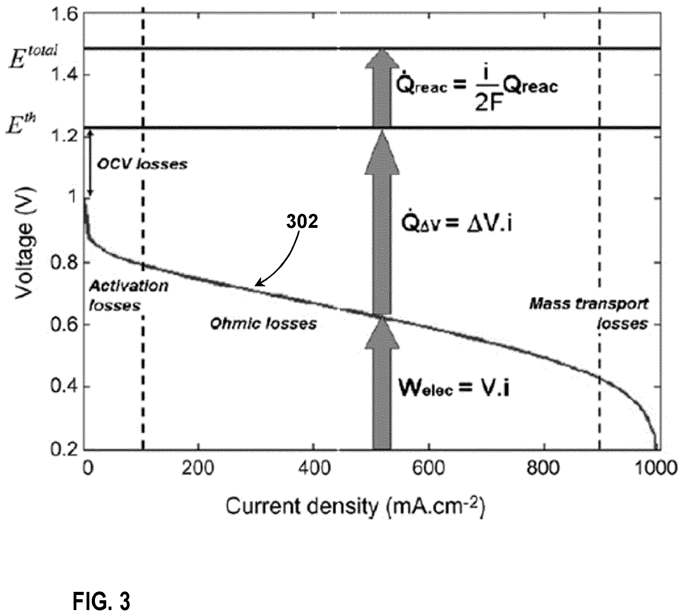

**FIG. 3** shows that, in the fuel cell system, heat sources are created as a consequence of various voltage losses. For example, Ramousse *et al.* (Ramousse, et al., "Heat sources in proton exchange membrane (PEM) fuel cells". J. Power Sources 2009, 192, 435-441) describe locations of heat sources in a fuel cell system, including Joule effect due to proton transport through the membrane; heat released by the half-reactions in the catalysts; electrochemical activation of reactions; sorption/desorption of water in the electrodes; and water condensation/evaporation. As shown by a polarization curve 302 in FIG. 3, voltage drops with increase in the current drawn out of the fuel cell system. Similarly, the fuel cell efficiency decreases with the increase in the fuel cell power.

In low-temperature PEMs, such as PEMs typically employed in a fuel cell stack in a fuel cell system of a fuel cell vehicle, the operating temperature is typically within 60 °C to 80 °C, and a target coolant inlet temperature is typically set at 60 °C. For example, with reference to FIG. 2, the target coolant inlet temperature at the coolant inlet 25a may be set at 60 °C. In examples, the target coolant inlet temperature may be adjusted to deviate from 60 °C, e.g., to be higher than 60 °C. The increase in the target coolant inlet temperature may be temporary, e.g., in dependence on current power demands from the fuel cell system. The increase in the target coolant inlet temperature may lead to a reduction of an amount of heat produced by one or more heat sources in the fuel cell system and/or other components of the vehicle including the fuel cell system. In some examples, the increase in the target coolant inlet t temperature may lead to a reduction of condensation at the cathode of the fuel cell stack of the fuel cell system, wherein the condensation at the cathode is a form of a heat source which is suitable for reduction as a result of the increase in the target coolant inlet temperature. The reduction of the condensation at the cathode is performed so as to maintain a desired humidity at the membrane, e.g., a PEM, of the fuel cell stack. For its proper performance, reliability, and durability, the membrane such as a PEM, is required to maintain a certain moisture level of the membrane, and its drying should be prevented.

In some examples, when a fuel cell system, e.g., in a vehicle, is operating with the target coolant inlet temperature set at 60 °C, there is condensation in the cathode of the fuel cell stack, and latent heat of the condensate i.e. water is transferred to the fluid in the system, such that the heat needs to be taken up by the cooling system. For example, in the fuel cell system operating at the highest system net power, approximately 9% of the heat load to the coolant may be due to the condensation in the cathode. Thus, the reduction in the condensation in the cathode may allow decreasing the amount of heat rejected to the coolant of the cooling system.

In order to reduce heat produced at the heat sources and rejected to the coolant of the cooling system, the method in accordance with examples of the present disclosure allows reducing the heat produced by one or more heat sources, e.g., a heat produced due to condensation in the cathode, thereby reducing the heat load in the cooling system. In some examples, as the target coolant inlet temperature is increased, either alone or in combination with an increase in a cathode air pressure, while maintaining the membrane humidification level, the condensation at the cathode is reduced thereby reducing the corresponding heat source. The heat produced by other heat sources may also be decreased, thereby a cause of waste heat is addressed. Another benefit includes an increase in the target temperature of the coolant at the coolant inlet of the fuel cell stack may also lead to some increase in efficiency of the fuel cell system.

As a target coolant inlet temperature increases, the temperature of the fuel cell stack increases. As the temperature of the fuel cell stack increases, some additional benefits also occur, as follows:
- Keeping constant water content in the membrane, the conductivity will increase. The increase in conductivity leads to a reduction in membrane ohmic resistance. This leads to a reduction in the fuel cell stack heating due to Joule's effect.
- The exchange current density increases, thus reducing the activation loss. This leads to a reduction in the heat flux due to electrochemical activation reactions.

In some examples, when a target coolant inlet temperature is at a certain level, e.g., 60 °C, an increase in heat transfer in the cathode leads to an increase in the total heat load to the coolant. With the lower target coolant inlet temperature, there may be condensation in the cathode so the latent heat is transferred to the air stream heating up the cathode, which will then need to be taken up by the coolant.

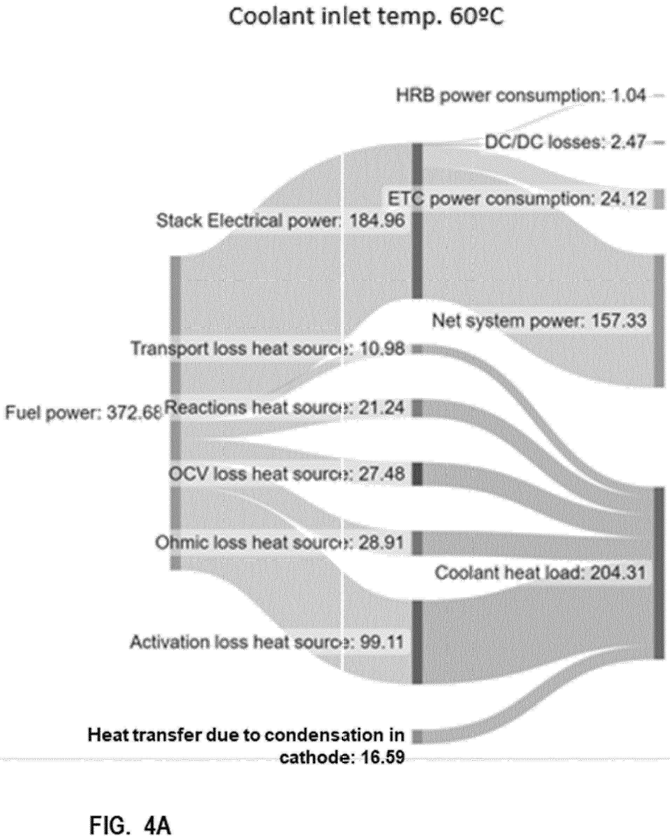

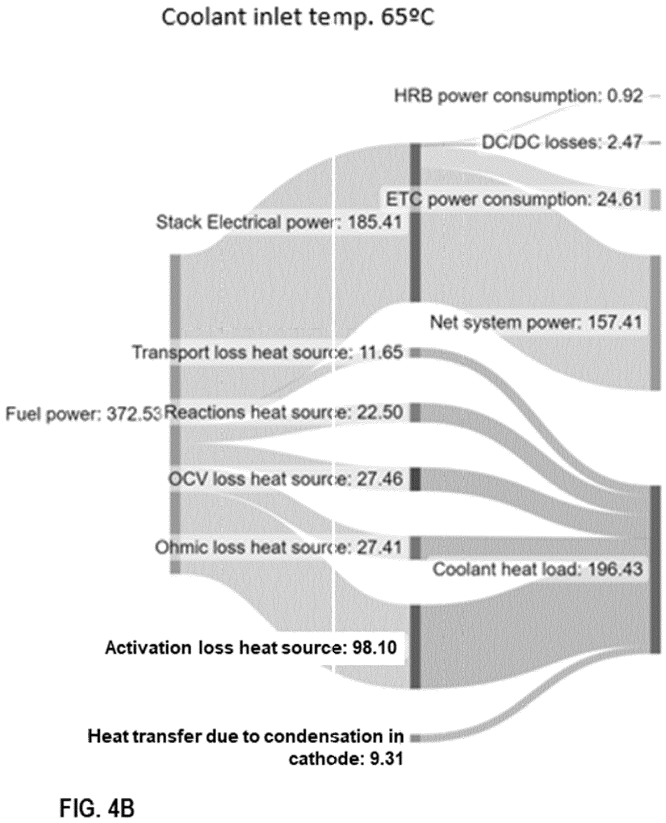

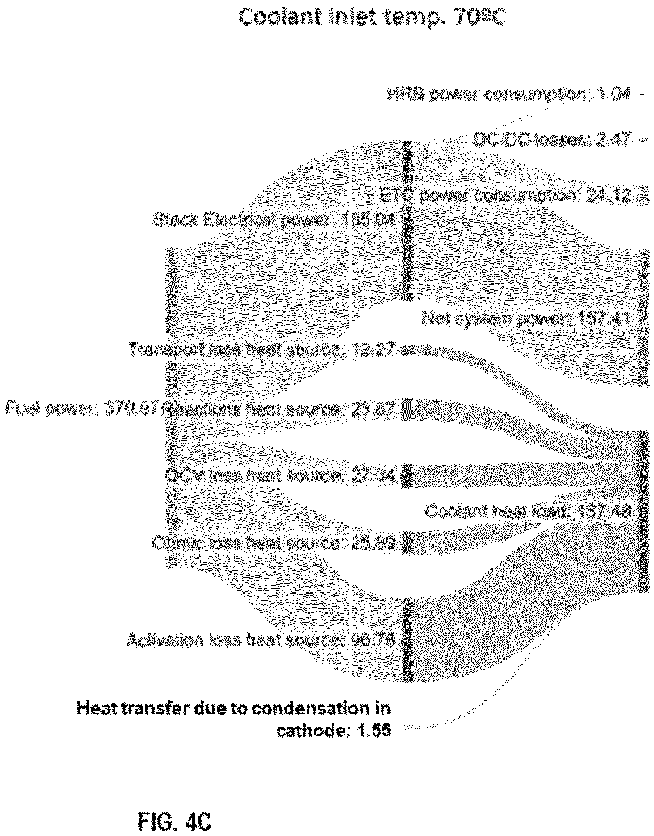

**FIGs. 4A****,** **4B****,** and **4C** are Sankey diagrams showing examples of energy flow and heat sources in a fuel cell system, for coolant inlet temperatures 60 °C (FIG. 4A), 65 °C (FIG. 4B), and 70 °C (FIG. 4C).

Table 1, below, showing examples of heat produced by various sources at target coolant inlet temperatures 60 °C, 65 °C, and 70 °C, respectively, shows a decrease in the heat rejection to the cooling system e.g. the coolant, with an increase in the target coolant inlet temperature. For example, Table 1 illustrates, as also shown in FIGs. 4A-4C, that the cathode heat rejection is reduced with an increase in the target coolant inlet temperature from 60 °C to 65 °C, and further from 65 °C to 70 °C.

| | coolant temp [ºC] | | | Delta 60 to 70ºC | |
|---|---|---|---|---|---|
| | 60 | 65 | 70 | [kW] | [%] |
| Reactions heat load [kW] | 21.24 | 22.50; | 23.67 | 2.43 | 11.5% |
| OCV loss heat load [kW] | 27.48: | 27.46 | 27.34. | -0.14 | -0.5% |
| Ohmic heat load [kW] | 28.91 | 27.41 | 25.89 | -3.02 | -10.5% |
| Activation heat load [kW] | 99.11 | 98.10 | 96.76 | -2.36 | -2.4% |
| Transport heat load [kW] | 10.98 | 11.65 | 12.27 | 1.29 | 11.7% |
| | | | | | |
| Total FC heat rejection [kW] | 187.72 | 187.13 | 185.92 | -1.79 | -1.0% |
| | | | | | |
| cathode heat rejection [kW] | 16.59 | 9.31 | 1.55 | -15.04 | -90.6% |
| anode heat rejection [kW] | -1.31 | -1.31 | -1.29 | 0.02 | -1.4% |
| coolant heat rejection [kW] | 203.00 | 195.13 | 186.18 | -16.81 | -8.3% |

In Table 1, the cathode heat rejection reflects the condensation at the cathode, wherein the decrease in the condensation leads to a reduction in the amount of heat rejected to the coolant. It should be noted that the numbers shown in FIGs. 4A-4C and in Table 1 are an example only.

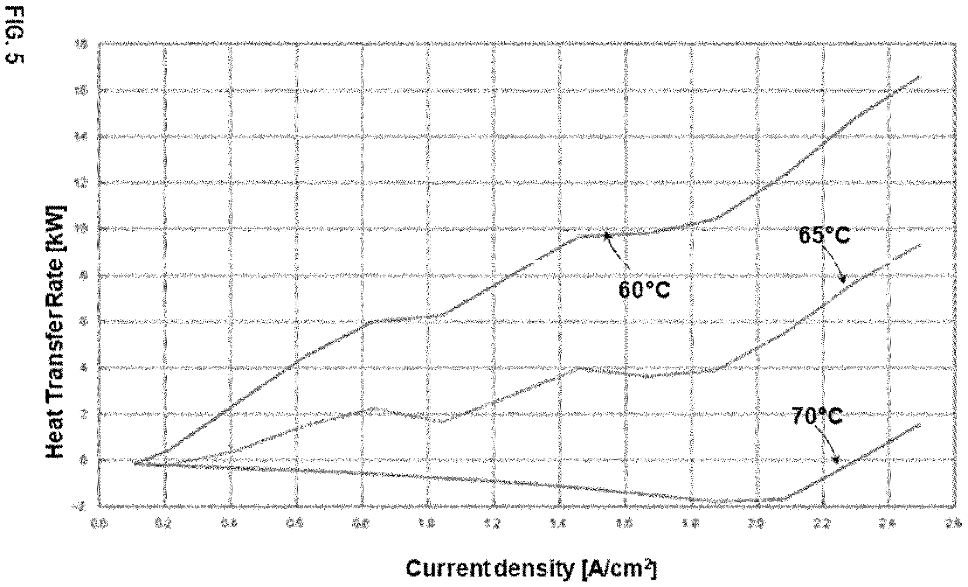

**FIG. 5** depicts graphs illustrating the heat transfer to the cathode (positive values), for target coolant inlet temperatures 60 °C, 65 °C, and 70 °C, respectively. As shown, the heat transfer rate decreases with an increase in the target coolant inlet temperature, thereby the condensation at the cathode is reduced.

In some examples, an increase in the target coolant inlet temperature from 60 °C to 70 °C may allow a reduction in heat rejection to the coolant by a value in a range from 6% to 14% or in a range from 5% to 12%. In some examples, an increase in the target coolant inlet temperature from 60 °C to 70 °C may allow a reduction in heat rejection to coolant by about 8%. A desired membrane humidity level may be maintained, even though the target coolant inlet temperature is increased.

In some examples, an increase in the target coolant inlet temperature from 60 °C to 75 °C may allow a reduction in heat rejection to the coolant by a value in a range from 10% to 25% or in a range from 10% to 20%. In some examples, an increase in the target coolant inlet temperature from 60 °C to 75 °C may allow a reduction in heat rejection to coolant by about 14%. The allowed increase in the target coolant inlet temperature may depend on a current density and cathode air pressure, such as a higher cathode air pressure may be required to prevent a decrease in the membrane humidity level, i.e. to prevent drying out the membrane. The current density is based on what power needs to be taken from the fuel cell system. These ranges are provided as examples only.

In some examples, an increase in the target coolant inlet temperature may reduce a power demand on one or more auxiliary devices that may be operated as part of the cooling system, to allow appropriate cooling of the fuel cell system. In general, a fuel cell system has a limited power to dissipate the waste heat and the additional power may need to be drawn from the one or more auxiliary devices. This, however, may affect a traction power utilized by the vehicle's propulsion/traction system comprising an electric machine that delivers traction power to wheels of the vehicle. In some cases, when power drawn by one or more auxiliaries, e.g., a heat exchanger fan, e.g. fan 45 of FIG. 2, becomes excessively high, the vehicle will lose traction power. Thus, the heat exchanger fan, as an example of the auxiliary device, may consume more electricity than an amount of heat it facilitates dissipating. Thus, while the heat exchanger fan is operated to cool the fuel cell stack, no actual cooling may occur.

Thus, the method in accordance with examples of the present disclosure allows decreasing a total heat resistance in the coolant thereby reducing the amount of power required by the one or more auxiliary devices. For example, responsive to an increase in the power load on the fuel cell system and thus in an increase in the heat rejection by the fuel cell system, e.g., when the vehicle is climbing or about to climb a hill, a target coolant inlet temperature may be raised to 70-75 °C, so that condensation at cathode is decreased and a cooling demand is decreased.

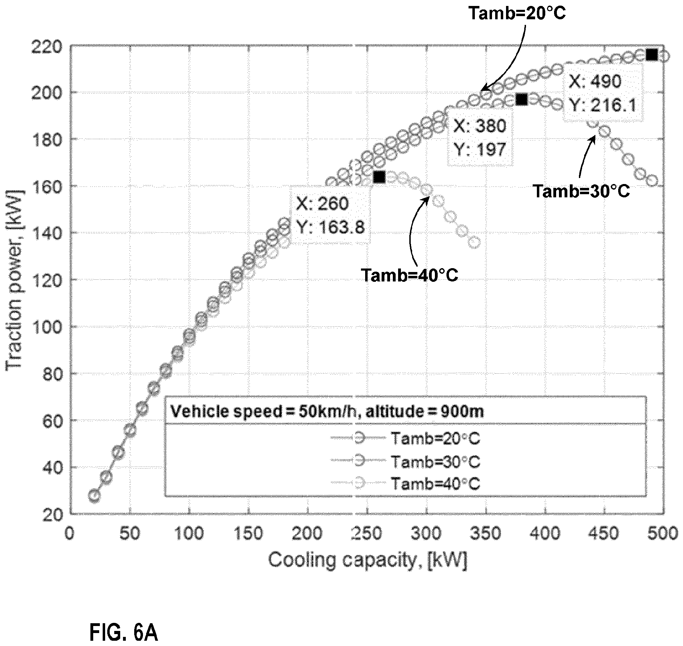

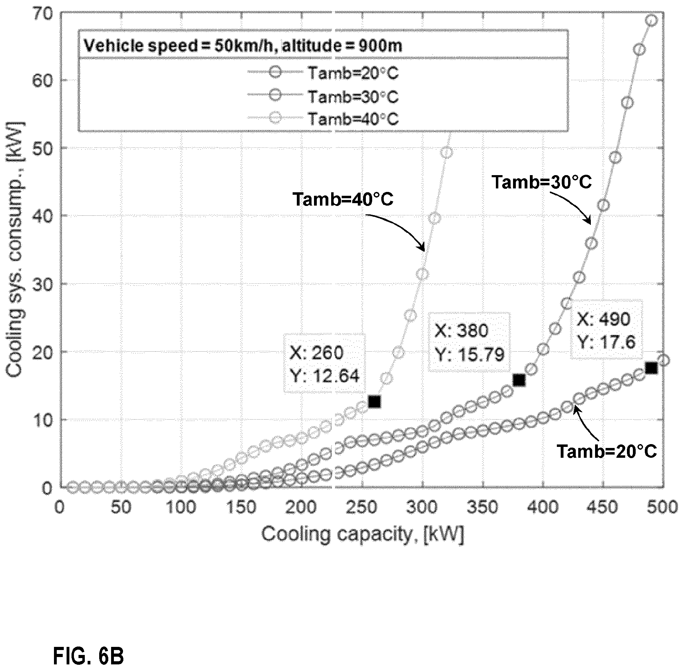

**FIGs. 6A** and **6B** illustrate an example of a relation between traction power of a fuel cell vehicle and cooling power or cooling capacity of a cooling system of the fuel cell vehicle, for a specific condition of a vehicle speed 50 km/h and an altitude of 900 m at which the vehicle is located. In FIG. 6A, the traction power, in kW, is shown in the y-axis as a function of the cooling capacity of a cooling system, in kW, shown in the x-axis, for ambient temperatures ("Tamb") 20 °C, 30 °C, and 40 °C, respectively. The traction power can be defined as a net system power of the fuel cell system subtracted by power consumed by all auxiliary loads such as, e.g., one or more heat exchanger fans, pumps, etc. The cooling capacity can be defined as a total fuel cell system heat rejection to the coolant.

With an increase in the fuel cell system power, there is an increase in cooling capacity, due to heat rejection since the fuel cell system operation becomes less efficient with the increase in the fuel cell system power. As shown in FIG. 6A, for some time, this relation is positive so both the traction power and the cooling capacity increase, because an amount of fan power required to drive the air through a heat exchanger such as a generator to reject the additional heat is still relatively small. At a certain point, the fan power balances out with the traction power, as shown by black squares on the curves corresponding to the three difference ambient temperature values. From that point onward, the fan power requirement increases sharply and, to provide that required power, the fuel cell system needs to increase its power output further. But the increase in the fuel cell system output power, in turn, leads to increase in the amount of heat rejected by the fuel cell system i.e. the waste heat. Thus, there is no longer a balance, such as a positive correlation, between the traction power and cooling capacity, and a further increase in the cooling capacity will lead to an increase in the auxiliary power more than the increase in fuel cell power. In FIG. 6A, at the inflection points shown with the black squares, the curves show a negative correlation between the traction power and cooling capacity. A location of an inflection point varies with the ambient temperature, as shown in FIG. 6A.

FIG. 6B depicts graphs showing an example of a relation between a cooling system consumption or a heat exchanger fan power, in kW, in the y-axis, and cooling capacity, in kW, in the x-axis, of a cooling system of the vehicle, for ambient temperatures ("Tamb") 20 °C, 30 °C, and 40 °C, respectively. As illustrated in FIG. 6B, at inflection points shown with black squares, a demand for the heat exchanger fan power begins to increase sharply. A location of the inflection point varies with the ambient temperature, as shown in FIG. 6B.

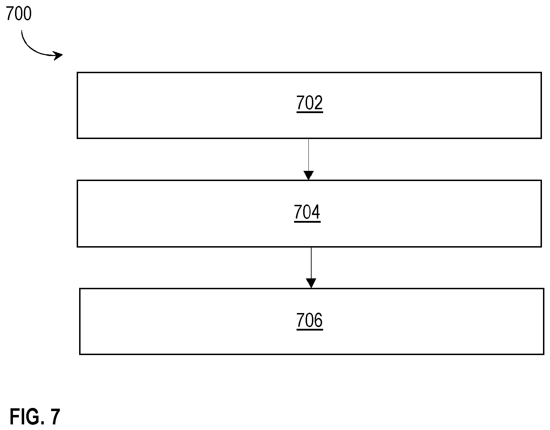

**FIG. 7** is a flow chart illustrating a method 700 for controlling operation of a fuel cell system of a fuel cell vehicle such as e.g. fuel cell system 20 of the fuel cell vehicle 10. The fuel cell system 20 comprises fuel cell stack 22 comprising the anode 24 and the cathode 26. The method 700 allows reducing heat produced by one or more heat sources in the fuel cell system 20, such as e.g. condensation at the cathode 26. Non-limiting examples of other sources comprise transport loss heat source, reaction heat source, open circuit voltage (OCV) loss heat source, Ohmic loss heat source, activation loss heat source, and heat transfer due to condensation in the cathode.

The method 700 may be performed by processing circuitry of a controller or control system, such as e.g. processing circuitry 32 of the control system 30 shown in FIGs. 1 and 2. The controlling operation of the fuel cell system may comprise controlling operation of a cooling system of the fuel cell vehicle, such that a control of the fuel cell system and a control of the cooling system may be used interchangeably herein.

At **block 702,** the method 700 comprises obtaining a value of power output of the fuel cell system, the value of the power output indicating a power demand from the fuel cell system during operation of the fuel cell vehicle. The value of the power output may be voltage and/or current value indicative of the power drawn from the fuel cell system. The fuel cell vehicle may be moving such as traveling a route that may be assigned to the vehicle e.g., as part of a mission. In some cases, the fuel cell vehicle may be stationary. In addition, the techniques in accordance with examples of the present disclosure apply to stationary applications.

In some examples, obtaining the value of power output of the fuel cell system comprises determining the value of power output of the fuel cell system. The control system may determine the value of power output of the fuel cell system based on one or more out of a load on the fuel cell system, a state and operating mode of the vehicle e.g. moving, idle, or stationary; characteristics of the route traveled by the vehicle; features of the vehicle including a weight of the vehicle, etc.

In some examples, a heat load on the cooling system or an amount of heat to be dissipated by the cooling system, may be determined. For example, a heat load on the cooling system due to condensation at the cathode of a fuel cell stack of the fuel cell system may be determined.

At **block 704,** the method 700 comprises repeatedly adjusting a target coolant inlet temperature of the coolant at a coolant inlet of the fuel cell stack to vary between a first target temperature level and a second target temperature level, in dependence on the value of the power output and so as to optimize a duration of time during which the target temperature is different from the first target temperature level and optimize a value of one or more parameters of a plurality of parameters related to operation of the fuel cell system. Thus, as the value of the power output varies, the control system repeatedly determines the target coolant inlet temperature and controls the fuel cell system, e.g., the cooling system of the vehicle, to adjust a coolant inlet temperature in accordance with the target coolant inlet temperature. In this way, the coolant inlet temperature will change to conform to the target coolant inlet temperature set by the control system, and the cooling system is controlled so that the coolant inlet temperature conforms to the target coolant inlet temperature for the selected duration of time.

In some examples, the target coolant inlet temperature may be adjusted based on the heat load on the cooling system, such as the amount of heat to be dissipated by the cooling system. The target coolant inlet temperature may additionally or alternatively be adjusted based on a traction power.

In some examples, the control system may be fine-tuned to the heat load. The temperature at one or both the coolant inlet and the coolant outlet, and/or at other parts of the cooling system, may be measured e.g. continuously. A coolant mass flow may also be measured, which is a direct measurement of actual heat load onto the coolant. The control system may, based on measured fuel mass and the electrical power produced, calculate an efficiency of the fuel cell system and derive or estimate an amount of heat that is expected to go into waste heat. The control system may then compare the actual heat load and an estimated amount of heat, calculated from the efficiency. If the actual heat load is higher than the estimated amount of heat calculated from the efficiency, this may indicate that condensation is happening in the cathode, responsive to which the control system may control the fuel cell system to increase the target coolant inlet temperature.

The target coolant inlet temperature is adjusted to vary between a first target temperature level and a second target temperature level, in dependence on the value of the power output and so as to minimize a duration of time during which the target temperature is different from the first target temperature level and optimize a value of one or more parameters of a plurality of parameters related to operation of the fuel cell system.

The second target temperature level is higher or greater than the first target temperature level. A value of the target coolant inlet temperature is adjusted so as to increase or decrease, depending on the value of the power output of the fuel cell system, and further in dependence on a current temperature of the coolant at the coolant inlet of the fuel cell stack.

The target coolant inlet temperature may be adjusted repeatedly, e.g., continuously, in dependence on the change in the monitored power output of the fuel cell system. The duration of time during which the target temperature is different from the first target temperature may be a time period selected so that the control system controls the cooling system to set the target coolant inlet temperature to a level that is different, e.g., greater than, the first target temperature level, and the actual coolant temperature at the coolant inlet of the fuel cell stack is above the first target temperature level for the selected time period. The actual coolant temperature at the coolant inlet, as well as an actual coolant temperature at the coolant outlet may be monitored using suitable temperature control sensors, e.g., those shown in FIG. 2. The duration of time during which the target temperature is different from the first target temperature may in some examples vary from about 1 minute to about 1 hour, or from about 1 minute to about 45 minutes, or from about 1 minute to about 30 minutes, or from about 1 minute to about 15 minutes, or from about 1 minute to about 10 minutes.

In some examples, the method 700 comprises, responsive to the value of the power output being above a threshold level, increasing the target coolant inlet temperature to a third target temperature level, wherein the third target temperature level is above the first target temperature level and below the second target temperature level or the third target temperature level is equal to the second target temperature level. The third target temperature level may be a target coolant inlet temperature that is different from the first target temperature level.

The threshold level for the power output may depend on the specifics of the fuel cell vehicle, a mission performed by the vehicle, a desired benefit to operation of the fuel cell system, and other factors. In some examples, multiple threshold levels for the value of the power output may be used, such that the target coolant inlet temperature may be adjusted to different temperature levels, for corresponding time periods, in response to the value of the power output between at or above a certain threshold level. In some examples, the threshold for the power output may be a variable associated with the mission performed by the vehicle and an objective of the control. The threshold may be defined to, e.g., perform one or more out of increasing a traction power, reducing a fuel consumption, minimizing a duration of a high temperature operation to reduce impact on degradation, etc.

For example, as the value of the power output of the fuel cell system increases, the control system may control the cooling system to allow the target coolant inlet temperature to be increased, for a certain duration of time which may be an optimal duration of time during which the target temperature is different from the first target temperature level. As the value of the power output of the fuel cell system decreases, e.g., becomes below the threshold level, the control system may control the cooling system to allow the target coolant inlet temperature to be decreased, for example, to the first target temperature level.

In some examples, the first target temperature level comprises 60 °C and the second target temperature level comprises 80 °C. In some examples, the first target temperature level comprises 60 °C and the second target temperature level comprises 75 °C. In some examples, the first target temperature level comprises 60 °C and the second target temperature level comprises 70 °C. In some examples, the second target temperature level may be selected so that a required cathode air pressure is used to maintain a desired membrane humidity.

In some examples, the first target temperature level and the second target temperature level are selected so that an average value of the target coolant inlet temperature is about 65°C during operation of the fuel cell system of the vehicle. The vehicle may be moving or it may be stationary.

The target coolant inlet temperature and the duration of time during which the target temperature is different from the first target temperature level may be selected so as to optimize a value of one or more parameters of a plurality of parameters related to operation of the fuel cell system. The optimization may be performed by the processing circuitry of the control system by applying a model, such as e.g. a cost function model that may be applied to minimize the duration of time during which the target temperature is different from the first target temperature level, while optimizing the value of at least one parameter of the plurality of parameters related to operation of the fuel cell system.

In some examples, the plurality of parameters related to operation of the fuel cell system comprise one or more out of a level of degradation of the fuel cell system; fuel consumption by the fuel cell system; an auxiliary load such as load on one or more fans, one or more pumps, and other components of the cooling system; efficiency of the fuel cell system; power of the fuel cell stack such as actual net power; and a state of charge (SoC) of an electrical storage system (ESS) of the fuel cell vehicle. The above examples of the parameters are non-limiting, and the plurality of parameters may include a fuel economy index, a hill climbing condition, or other one or more conditions at which the power demand on the fuel cell system may increase.

A value of the one or more of the parameters may be optimized by the control system as the control system selects the target coolant inlet temperature and the duration of time during which the target temperature is different from the first target temperature level. The target coolant inlet temperature and the duration of time may be selected so that a values of the one or more of the parameters may be optimized. The value of a parameter related to operation of the fuel cell system may be a value of a difference between a desired value of that parameter and a value of the parameter that is associated with a state of the fuel cell system at which a target coolant inlet temperature is set to the selected target coolant inlet temperature. In other words, it may be optimized to which degree the value of the parameter is allowed to deviate from its desired value.

For example, the target coolant inlet temperature may be allowed to increase to a temperature level above 60 °C, for a certain time duration, e.g., 20 minutes, so that a value of the level of degradation of the fuel cell system is not greater than a certain number of hours. The level of degradation of the fuel cell system may be defined, using, e.g., a remaining number of operating hours of the fuel cell system. In some cases, the level of degradation of the fuel cell system may be defined as a remaining lifetime of the fuel cell system, or a state of health (SoH) of the fuel cell system. For example, the level of degradation of 50% may indicate that there is 50% of remaining lifetime of the fuel cell system.

In some examples, the value of the power output of the fuel cell system may be a predicted value of the power output of the fuel cell system. For example, for the fuel cell vehicle traveling a route, the control system 30 may predict that the vehicle is approaching an ascending part of the route where the vehicle will be climbing a hill. Depending on the steepness of the hill and other factors, e.g, a weight of the vehicle, which may also be carrying a load, the increase in the power demand on the fuel cell system may be determined. A higher traction power is required for the vehicle to climb uphill.

An increased power output required from the fuel cell system may be detected and/or predicted in various other situations and in dependence on various factors. For example, the vehicle may be accelerated, e.g., based on a driver input and/or automatically. Further, as an example, when an upcoming increase in a speed limit in a route traveled by the vehicle is detected, an increase of the value of the power output of the fuel cell system may be predicted.

In some examples, a mission for the vehicle is optimized in a way that minimizes an amount of time during which the coolant is at an increased temperature, due to the value of the target coolant inlet temperature being set to higher than 60 °C. A cost function, e.g., a cost function model, may be used to determine to which level the value of the target coolant inlet temperature may be increased, so that a value of the one or more parameters related to operation of the fuel cell system is at a desired value, or deviates from the desired value within an acceptable threshold or range, or varies within an acceptable threshold or range.

The value of the target coolant inlet temperature may be adjusted, such as increased, to e.g. above 60 °C, so that one or more heat sources in the fuel cell system, e.g. the cooling system, are reduced to thereby reduce an amount of power required to absorb or dissipate the heat produced by the heat sources is reduced. The reduction in the amount of heat created by the one or more heat sources in the fuel cell system may advantageously allow reducing a power drawn from one or more auxiliary devices of the fuel cell system that are operated as part of the cooling system. This in turn advantageously allows reducing or eliminating a need to draw additional power from the traction power, which would otherwise negatively affect efficiency of operation of the fuel cell vehicle. Furthermore, during normal operating conditions of the vehicle, expense of hydrogen fuel may be decreased due to a reduced demand on the fuel cell system.

At **block 706,** the control system may control or adjust an air pressure at a cathode of the fuel cell stack as the value of the target coolant inlet temperature is adjusted. The processing at block 706 may be optional in some examples. For example, the air pressure at the cathode may be increased as the target coolant inlet temperature is increased.

In some examples, in addition to controlling the fuel cell system to adjust the target coolant inlet temperature, the control system may control the fuel cell system to adjust a cathode air pressure. An air compressor, e.g., an ETC, may be controlled to adjust the cathode air pressure. In some examples, as the target coolant inlet temperature is increased from the first target temperature level to the second target temperature level, or to any value below the second target temperature level but above the first target temperature level, the control system 30 may determine whether the air compressor needs to be controlled to increase the cathode air pressure.

In some cases, responsive to an increase in the value of the power output of the fuel cell system, and/or an increase in the heat load on the cooling system and/or a traction power requested by the vehicle, the control system may control the fuel cell system to increase both the target inlet cathode temperature and the cathode air pressure. Responsive to a further change in one or more of the value of the power output of the fuel cell system, the heat load on the cooling system, and the traction power, the control system may control the fuel cell system to decrease the cathode air pressure. The cathode air pressure, also referred to as an air pressure in the cathode, may be controlled to prevent the membrane of the fuel cell stack of the fuel cell system from drying.

When a target coolant inlet temperature increases, there is increased possibility of drying out the membrane of the fuel cell stack. To avoid that, i.e., to be able to raise the target coolant inlet temperature above a certain level, the air pressure in the cathode of the fuel cell stack has to be also increased. This prevents the membrane from drying. That is possible with the active control of e.g. an electric turbocharger (ETC), in order to increase the air pressure in the cathode side.

In some examples, the control system obtains or determines the power request from the fuel cell system, determines the target coolant inlet temperature, and determines whether a boost also needs to be raised, i.e. whether the air compressor needs to be controlled to increase an air pressure.

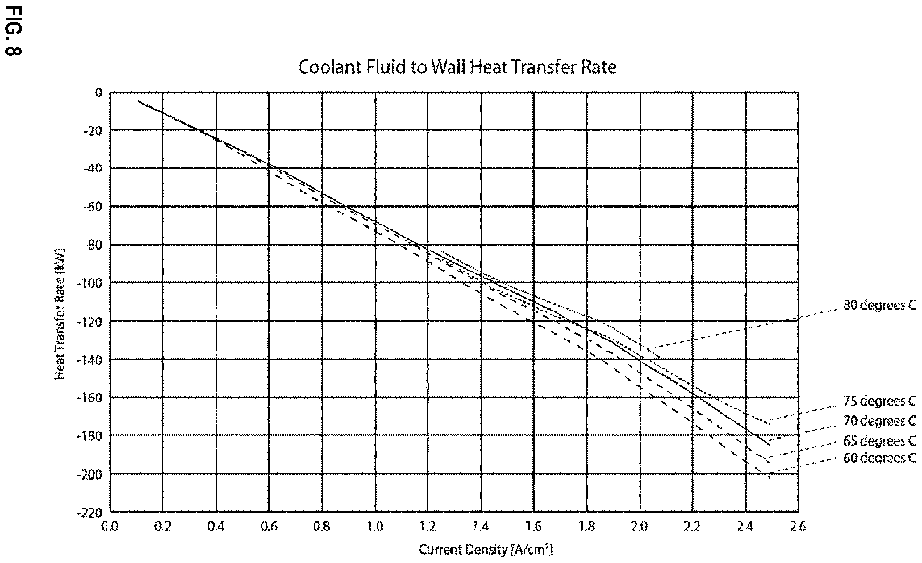

**FIG. 8** illustrates graphs showing a heat transfer rate to coolant as a function of a current density, for target coolant inlet temperatures 60 °C, 65 °C, 70 °C, 75 °C, and 80 °C, respectively, in accordance with an example. FIG. 8 shows where it may be required to raise a boost pressure by an compressor such as e.g. electric turbocharger, with a target coolant inlet temperature set to a certain temperature level.

In some examples, to increase the target coolant inlet temperature to 75°C, the air compressor may be controlled but may have a limited boost level to cover the whole fuel cell power level, such as in an example where the current density has to be above 1 A/cm². In some cases, with a target coolant inlet temperature set to 75 °C, the heat rejection to coolant reduces by approximately 13.5%, as an example.

In some examples, below the current density of 1 A/cm², the target coolant inlet temperature coolant may be set to up to 70 °C, and an additional compression system, e.g., a 2-stage compression system or another suitable system, may be used to have a higher boost.

In some examples, to increase the target coolant inlet temperature to 80 °C, the air compressor may be controlled to increase the pressure enough at higher current densities to prevent drying out the membrane but up to a current density of 2 A/cm². It should be appreciated that the specific numbers shown in FIG. 8, as well as in other figures herein, are non-limiting examples only.

As mentioned above, the method in accordance with examples of the present disclosure may be implemented in a genset. In some examples, the method in accordance with examples of the present disclosure may be implemented in a stationary system comprising one or more fuel cell systems.

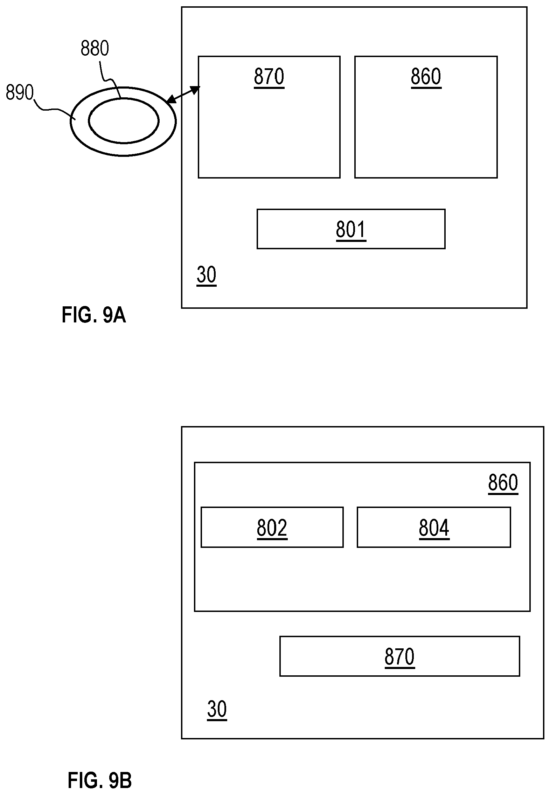

To perform the method steps described herein, the control system 30 may be configured to perform the processing described in connection with FIG. 7 and/or any other examples in accordance with the present disclosure. The control system 30 may, for example, comprise an arrangement as depicted in **FIGs. 9A** and **9B****.** The control system 30 may be positioned in any suitable location of the vehicle 10. In some examples, the control system 30 may be a remote control system or some of its functions may be performed in a remote control system.

As shown in **FIG. 9A****,** the control system 30 comprises processing circuitry 860, memory 870, and an input and output interface 801 configured to communicate with any necessary components and/or entities of examples herein. The input and output interface 801 may comprise a wireless and/or wired receiver and a wireless and/or wired transmitter. In some examples, the input and output interface 801 may comprise a wireless and/or wired transceiver. The control system 30 may use the input and output interface 801 to control and communicate with various sensors, actuators, subsystems, and/or interfaces of the fuel cell system and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 860 of the control system 30, together with computer program code stored in a computer-readable storage medium for performing the functions and actions of the examples herein. The processing circuitry 860 may be the same or similar to the processing circuitry 32 shown in FIG. 2.

The memory 870 may comprise one or more memory units. The memory 870 comprises computer-executable instructions executable by the processing circuitry 860 of the control system 30. The memory 870 is configured to store, e.g., information, data, etc., and the computer-executable instructions to perform, when executed by the processing circuitry 860, the methods in accordance with examples herein. The control system 30 may additionally obtain information from an external memory.

The methods according to the aspects of the present disclosure may be implemented by e.g. a computer program product 880 or a computer program, comprising computer-executable instructions, i.e., software code portions, which, when executed on at least one processor, e.g., the processing circuitry 860, cause the at least one processor to carry out the actions described herein, as performed by the control system 30.

In some examples, the computer program product 880 is stored on a computer-readable storage medium 890. The computer-readable storage medium 890 may be, e.g., a disc, a universal serial bus (USB) stick, or similar device. The computer-readable storage medium 890, having stored thereon the computer program product, may comprise computer-executable instructions which, when executed by the processing circuitry 860, cause the processing circuitry 860 to perform the actions of the methods in accordance with examples of the present disclosure described herein, as performed by the control system 30.

As shown in **FIG. 9B****,** the control system 30 may comprise an obtaining unit **802.** The control unit system 30, the processing circuitry 860, and/or the obtaining unit **802** are configured to obtain a value of power output of the fuel cell system, the value of the power output indicating a power demand from the fuel cell system during operation of the fuel cell vehicle. The control unit system 30, the processing circuitry 860, and/or the obtaining unit **802** may be configured to determine the value of power output of the fuel cell system.

As also shown in **FIG. 9B****,** the control system 30 may comprise a determining/adjusting unit **804.** The control system 30, the processing circuitry 860, and/or the determining/adjusting unit 804 are configured to repeatedly adjust a value of a target coolant inlet temperature of the coolant at a coolant inlet of the fuel cell stack to vary between a first target temperature level and a second target temperature level, in dependence on the value of the power output and so as to optimize a duration of time during which the target temperature is different from the first target temperature level and optimize a value of one or more parameters of a plurality of parameters related to operation of the fuel cell system.

The repeatedly adjusting the target coolant inlet temperature to vary between the first target temperature level and the second target temperature level involves determining a specific value of the target coolant inlet temperature, different from the first target temperature level, and the duration of time during which the target temperature is different from the first target temperature level. Thus, the control system 30, the processing circuitry 860, and/or the determining/adjusting unit 804 may be configured to determine the target coolant inlet temperature of the coolant in dependence on the value of the power output and so as to optimize the duration of time and so as to optimize the value of one or more parameters. The determining/adjusting unit 804 may be formed by more than one units, e.g, separate determining and adjusting units. In such implementations, the determining unit may be configured to determine a value of the target coolant inlet temperature and the duration of time during which that value is different from the first target temperature level. The adjusting unit may be configured to adjust, or set, the target coolant inlet temperature to the determined value, for the determined time period.

In some cases, the control system 30, the processing circuitry 860, and/or the determining/adjusting unit 804 may be configured to, responsive to the value of the power output being above a threshold level, reversibly increase the value of the target coolant inlet temperature to a third target temperature level, wherein the third target temperature level is above the first target temperature level and below the second target temperature level or the third target temperature level is equal to the second target temperature level.

In some examples, the value of the power output of the fuel cell system is a predicted value of the power output of the fuel cell system. The predicted value may be obtained based on data on a route assigned to the vehicle.

In some examples, the control system 30, the processing circuitry 860, and/or the determining/adjusting unit 804 may be configured to optimize the duration of time during which the value of the target temperature is different from the first target temperature level by using a cost function model, and wherein the processing circuity is configured to apply the cost function model to minimize the duration of time during which the target temperature is different from the first target temperature level, while optimizing a value of at least one parameter of the plurality of parameters related to operation of the fuel cell system.

In some examples, the control system 30, the processing circuitry 860, and/or the determining/adjusting unit 804 may be configured to control an air pressure at a cathode of the fuel cell stack as the value of the target coolant inlet temperature is adjusted. For example, the air pressure at the cathode may be increased as the target coolant inlet temperature is increased.

In some examples, the plurality of parameters related to operation of the fuel cell system comprise one or more out of a level of degradation of the fuel cell system, fuel consumption by the fuel cell system, an auxiliary load, efficiency of the fuel cell system, power of the fuel cell stack, and a state of charge (SoC) of an electrical storage system (ESS) of the fuel cell vehicle.

Those skilled in the art will appreciate that the units in the control system 30 described above may refer to a combination of analogue and digital circuits, and/or one or more processors configured with software and/or firmware, e.g., stored in the control system 30, that, when executed by the respective one or more processors, may perform the methods in accordance with embodiments of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell vehicle, comprising:
a fuel cell system comprising a fuel cell stack configured to generate power by electrochemical reaction;
a cooling system comprising a coolant circulating in the cooling system and configured to dissipate heat generated as a result of the electrochemical reaction; and
a control system comprising processing circuitry that is configured to:
obtain a value of power output of the fuel cell system, the value of the power output indicating a power demand from the fuel cell system during operation of the fuel cell vehicle; and
repeatedly adjust a value of a target coolant inlet temperature of the coolant at a coolant inlet of the fuel cell stack to vary between a first target temperature level and a second target temperature level that is higher than the first target temperature level, in dependence on the value of the power output and so as to minimize a duration of time during which the target temperature is different from the first target temperature level so that a value of one or more parameters of a plurality of parameters related to operation of the fuel cell system is at a desired value, or deviates from the desired value within an acceptable threshold or range, or varies within an acceptable threshold or range, wherein
as the value of the power output increases, the processing circuitry controls the cooling system to allow the target coolant inlet temperature to be increased, and
the processing circuitry is configured to increase an air pressure at a cathode side of the fuel cell stack as the target coolant inlet temperature is increasing.

2. The fuel cell vehicle according to claim 1, wherein the processing circuitry of the control system is configured to, responsive to the value of the power output being above a threshold level, reversibly increase the value of the target coolant inlet temperature to a third target temperature level, wherein the third target temperature level is above the first target temperature level and below the second target temperature level or the third target temperature level is equal to the second target temperature level.

3. The fuel cell vehicle according to claim 1 or 2, wherein the value of the power output of the fuel cell system is a predicted value of the power output of the fuel cell system.

4. The fuel cell vehicle according to claim 3, wherein the predicted value is obtained based on data on a route assigned to the vehicle.

5. The fuel cell vehicle according to any one of claims 1 to 4, wherein the processing circuitry of the control system is configured to optimize the duration of time during which the value of the target temperature is different from the first target temperature level by using a cost function model, and wherein the processing circuity is configured to apply the cost function model to minimize the duration of time during which the target temperature is different from the first target temperature level, while optimizing a value of at least one parameter of the plurality of parameters related to operation of the fuel cell system; and/or
wherein the plurality of parameters related to operation of the fuel cell system comprise one or more out of a level of degradation of the fuel cell system, fuel consumption by the fuel cell system, an auxiliary load, efficiency of the fuel cell system, power of the fuel cell stack, and a state of charge (SoC) of an electrical storage system (ESS) of the fuel cell vehicle; and/or
wherein the first target temperature level comprises 60 °C and the second target temperature level comprises 80 °C, or wherein the first target temperature level comprises 60 °C and the second target temperature level comprises 75 °C.

6. A method (700) of operating a fuel cell system comprising a fuel cell stack, the method comprising:
obtaining (702) a value of power output of the fuel cell system, the value of the power output indicating a power demand from the fuel cell system during operation of the fuel cell vehicle; and
repeatedly adjusting (704) a value of a target coolant inlet temperature of the coolant at a coolant inlet of the fuel cell stack to vary between a first target temperature level and a second target temperature level that is higher than the first target temperature level, in dependence on the value of the power output and so as to minimize a duration of time during which the target temperature is different from the first target temperature level so that a value of one or more parameters of a plurality of parameters related to operation of the fuel cell system is at a desired value, or deviates from the desired value within an acceptable threshold or range, or varies within an acceptable threshold or range, wherein the method comprises
as the value of the power output increases, controlling the cooling system to allow the target coolant inlet temperature to be increased, and
increasing an air pressure at a cathode side of the fuel cell stack as the target coolant inlet temperature is increasing.

7. The method according to claim 6, further comprising, responsive to the value of the power output being above a threshold level, reversibly increasing the value of the target coolant inlet temperature to a third target temperature level, wherein the third target temperature level is above the first target temperature level and below the second target temperature level or the third target temperature level is equal to the second target temperature level.

8. The method according to claim 6 or 7, wherein the value of the power output of the fuel cell system is a predicted value of the power output of the fuel cell system.

9. The method according to any one of claims 6 to 8, wherein the method comprises optimizing the duration of time during which the target temperature is different from the first target temperature level by using a cost function model, and wherein the method comprises applying the cost function model to minimize the duration of time during which the target temperature is different from the first target temperature level, while optimizing the value of the one or more parameters of the plurality of parameters related to operation of the fuel cell system; and/or
wherein the plurality of parameters related to operation of the fuel cell system comprise one or more out of a level of degradation of the fuel cell system, fuel consumption by the fuel cell system, an auxiliary load, efficiency of the fuel cell system, power of the fuel cell stack, and a state of charge (SoC) of an electrical storage system (ESS) of the fuel cell vehicle; and/or
wherein the first target temperature level comprises 60 °C and the second target temperature level comprises 80 °C, or wherein the first target temperature level comprises 60 °C and the second target temperature level comprises 75 °C.

10. A control system (30) for controlling the fuel cell system (20) of the fuel cell vehicle (10), the control system (30) comprising processing circuitry configured to perform the method of any one of claims 6 to 9.

11. A fuel cell vehicle (10) comprising the control system (30) of claim 10.

12. A computer program product comprising instructions, which, when executed by processing circuitry, cause the processing circuitry to perform the method of any one of claims 6 to 9.

13. A computer-readable storage medium, having stored thereon a computer program product comprising instructions which, when executed by processing circuitry, cause the processing circuitry to perform the method of any one of claims 6 to 9.

## Patentansprüche

1. Brennstoffzellenfahrzeug, umfassend:
ein Brennstoffzellensystem, umfassend einen Brennstoffzellenstapel, der konfiguriert ist, um Leistung durch elektrochemische Reaktion zu erzeugen;
ein Kühlsystem, das ein in dem Kühlsystem zirkulierendes Kühlmittel umfasst und konfiguriert ist, um als Ergebnis der elektrochemischen Reaktion erzeugte Wärme abzuführen; und
ein Steuersystem, das einen Verarbeitungsschaltkreis umfasst, der konfiguriert ist zum:
Erhalten eines Werts einer Leistungsabgabe des Brennstoffzellensystems, wobei der Wert der Leistungsabgabe einen Leistungsbedarf des Brennstoffzellensystems während des Betriebs des Brennstoffzellenfahrzeugs anzeigt; und
wiederholtes Anpassen eines Werts einer Ziel-Kühlmittel-Einlasstemperatur des Kühlmittels an einem Kühlmittel-Einlass des Brennstoffzellenstapels, um zwischen einem ersten Zieltemperaturniveau und einem zweiten Zieltemperaturniveau zu variieren, das höher als das erste Zieltemperaturniveau ist, in Abhängigkeit von dem Wert der Leistungsabgabe und um eine Zeitdauer zu minimieren, während der die Zieltemperatur von dem ersten Zieltemperaturniveau verschieden ist, so dass ein Wert eines oder mehrerer Parameter einer Vielzahl von Parametern, die sich auf den Betrieb des Brennstoffzellensystems beziehen, bei einem gewünschten Wert liegt, oder von dem gewünschten Wert innerhalb einer akzeptablen Schwelle oder eines akzeptablen Bereichs abweicht, oder innerhalb einer akzeptablen Schwelle oder eines akzeptablen Bereichs variiert, wobei
mit steigendem Wert der Leistungsabgabe der Verarbeitungsschaltkreis das Kühlsystem steuert, um zu ermöglichen, dass die Ziel-Kühlmittel-Einlasstemperatur erhöht wird, und
der Verarbeitungsschaltkreis konfiguriert ist, um einen Luftdruck an einer Kathodenseite des Brennstoffzellenstapels zu erhöhen, wenn die Ziel-Kühlmittel-Einlasstemperatur ansteigt.

2. Brennstoffzellenfahrzeug nach Anspruch 1, wobei der Verarbeitungsschaltkreis des Steuersystems konfiguriert ist, um als Reaktion darauf, dass der Wert der Leistungsabgabe über einem Schwellenwert liegt, den Wert der Ziel-Kühlmittel-Einlasstemperatur reversibel auf eine dritte Zieltemperaturstufe zu erhöhen, wobei die dritte Zieltemperaturstufe über der ersten Zieltemperaturstufe und unter der zweiten Zieltemperaturstufe liegt oder die dritte Zieltemperaturstufe gleich der zweiten Zieltemperaturstufe ist.

3. Brennstoffzellenfahrzeug nach Anspruch 1 oder 2, wobei der Wert der Leistungsabgabe des Brennstoffzellensystems ein vorhergesagter Wert der Leistungsabgabe des Brennstoffzellensystems ist.

4. Brennstoffzellenfahrzeug nach Anspruch 3, wobei der vorhergesagte Wert basierend auf Daten zu einer dem Fahrzeug zugewiesenen Route erhalten wird.

5. Brennstoffzellenfahrzeug nach einem der Ansprüche 1 bis 4, wobei der Verarbeitungsschaltkreis des Steuersystems konfiguriert ist, um die Zeitdauer zu optimieren, während welcher der Wert der Zieltemperatur von dem ersten Zieltemperaturniveau verschieden ist, durch Verwendung eines Kostenfunktionsmodells, und wobei der Verarbeitungsschaltkreis konfiguriert ist, um das Kostenfunktionsmodell anzuwenden, um die Zeitdauer zu minimieren, während welcher die Zieltemperatur von dem ersten Zieltemperaturniveau verschieden ist, während ein Wert von mindestens einem Parameter der Vielzahl von Parametern bezogen auf den Betrieb des Brennstoffzellensystems optimiert wird; und/oder
wobei die Vielzahl von Parametern, die sich auf den Betrieb des Brennstoffzellensystems beziehen, einen oder mehrere aus einem Degradationsgrad des Brennstoffzellensystems, Kraftstoffverbrauch durch das Brennstoffzellensystem, einer Hilfslast, Wirkungsgrad des Brennstoffzellensystems, Leistung des Brennstoffzellenstapels und einem Ladezustand (SoC) eines elektrischen Speichersystems (ESS) des Brennstoffzellenfahrzeugs umfassen; und/oder
wobei das erste Zieltemperaturniveau 60 °C umfasst und das zweite Zieltemperaturniveau 80 °C umfasst, oder wobei das erste Zieltemperaturniveau 60 °C umfasst und das zweite Zieltemperaturniveau 75 °C umfasst.

6. Verfahren (700) zum Betreiben eines Brennstoffzellensystems, das einen Brennstoffzellenstapel umfasst, wobei das Verfahren umfasst:
Erhalten (702) eines Werts einer Leistungsabgabe des Brennstoffzellensystems, wobei der Wert der Leistungsabgabe einen Leistungsbedarf des Brennstoffzellensystems während des Betriebs des Brennstoffzellenfahrzeugs anzeigt; und
wiederholtes Anpassen (704) eines Werts einer Ziel-Kühlmittel-Einlasstemperatur des Kühlmittels an einem Kühlmittel-Einlass des Brennstoffzellenstapels, um zwischen einem ersten Zieltemperaturniveau und einem zweiten Zieltemperaturniveau zu variieren, das höher als das erste Zieltemperaturniveau ist, in Abhängigkeit von dem Wert der Leistungsabgabe und um eine Zeitdauer zu minimieren, während der die Zieltemperatur von dem ersten Zieltemperaturniveau verschieden ist, so dass ein Wert eines oder mehrerer Parameter einer Vielzahl von Parametern, die sich auf den Betrieb des Brennstoffzellensystems beziehen, bei einem gewünschten Wert liegt oder von dem gewünschten Wert innerhalb einer akzeptablen Schwelle oder eines akzeptablen Bereichs abweicht oder innerhalb einer akzeptablen Schwelle oder eines akzeptablen Bereichs variiert, wobei das Verfahren umfasst
mit steigendem Wert der Leistungsabgabe Steuern des Kühlsystems, um zu ermöglichen, dass die Ziel-Kühlmittel-Einlasstemperatur erhöht wird, und
Erhöhen eines Luftdrucks an einer Kathodenseite des Brennstoffzellenstapels, wenn die Ziel-Kühlmittel-Einlasstemperatur ansteigt.

7. Verfahren nach Anspruch 6, ferner umfassend, ansprechend auf den Wert der Leistungsabgabe, der über einem Schwellenwert liegt, reversibles Erhöhen des Werts der Ziel-Kühlmittel-Einlasstemperatur auf ein drittes Zieltemperaturniveau, wobei das dritte Zieltemperaturniveau über dem ersten Zieltemperaturniveau und unter dem zweiten Zieltemperaturniveau liegt oder das dritte Zieltemperaturniveau gleich dem zweiten Zieltemperaturniveau ist.

8. Verfahren nach Anspruch 6 oder 7, wobei der Wert der Leistungsabgabe des Brennstoffzellensystems ein vorhergesagter Wert der Leistungsabgabe des Brennstoffzellensystems ist.

9. Verfahren nach einem der Ansprüche 6 bis 8, wobei das Verfahren das Optimieren der Zeitdauer, während der die Zieltemperatur von dem ersten Zieltemperaturniveau verschieden ist, durch Verwendung eines Kostenfunktionsmodells umfasst, und wobei das Verfahren das Anwenden des Kostenfunktionsmodells umfasst, um die Zeitdauer zu minimieren, während der die Zieltemperatur von dem ersten Zieltemperaturniveau verschieden ist, während der Wert des einen oder der mehreren Parameter der Vielzahl von Parametern bezogen auf den Betrieb des Brennstoffzellensystems optimiert wird; und/oder
wobei die Vielzahl von Parametern, die sich auf den Betrieb des Brennstoffzellensystems beziehen, einen oder mehrere aus einem Degradationsgrad des Brennstoffzellensystems, Kraftstoffverbrauch durch das Brennstoffzellensystem, einer Hilfslast, Wirkungsgrad des Brennstoffzellensystems, Leistung des Brennstoffzellenstapels und einem Ladezustand (SoC) eines elektrischen Speichersystems (ESS) des Brennstoffzellenfahrzeugs umfassen; und/oder
wobei das erste Zieltemperaturniveau 60 °C umfasst und das zweite Zieltemperaturniveau 80 °C umfasst, oder wobei das erste Zieltemperaturniveau 60 °C umfasst und das zweite Zieltemperaturniveau 75 °C umfasst.

10. Steuersystem (30) zum Steuern des Brennstoffzellensystems (20) des Brennstoffzellenfahrzeugs (10), wobei das Steuersystem (30) einen Verarbeitungsschaltkreis umfasst, der konfiguriert ist, um das Verfahren nach einem der Ansprüche 6 bis 9 durchzuführen.

11. Brennstoffzellenfahrzeug (10), das das Steuersystem (30) nach Anspruch 10 umfasst.

12. Computerprogrammprodukt, umfassend Anweisungen, die, wenn sie durch den Verarbeitungsschaltkreis ausgeführt werden, veranlassen, dass der Verarbeitungsschaltkreis das Verfahren nach einem der Ansprüche 6 bis 9 durchführt.

13. Computerlesbares Speichermedium, auf dem ein Computerprogrammprodukt gespeichert ist, das Anweisungen umfasst, die, wenn sie von einem Verarbeitungsschaltkreis ausgeführt werden, den Verarbeitungsschaltkreis veranlassen, das Verfahren nach einem der Ansprüche 6 bis 9 durchzuführen.

## Revendications

1. Véhicule à pile à combustible, comprenant :
un système de pile à combustible comprenant un empilement de piles à combustible configuré pour générer de la puissance par réaction électrochimique ;
un système de refroidissement comprenant un liquide de refroidissement circulant dans le système de refroidissement et conçu pour dissiper la chaleur générée en conséquence de la réaction électrochimique ; et
un système de commande comprenant un système de circuits de traitement qui est configuré pour :
obtenir une valeur de sortie de puissance du système de pile à combustible, la valeur de la sortie de puissance indiquant une demande de puissance par le système de pile à combustible pendant le fonctionnement du véhicule à pile à combustible ; et
ajuster de manière répétée une valeur d'une température d'entrée cible de liquide de refroidissement du liquide de refroidissement au niveau d'une entrée de liquide de refroidissement de l'empilement de piles à combustible pour varier entre un premier niveau de température cible et un deuxième niveau de température cible qui est supérieur au premier niveau de température cible, en dépendance de la valeur de la sortie de puissance et de façon à minimiser une durée de temps pendant laquelle la température cible est différente du premier niveau de température cible de sorte qu'une valeur d'un ou plusieurs paramètres d'une pluralité de paramètres se rapportant au fonctionnement du système de pile à combustible est à une valeur souhaitée, ou s'écarte de la valeur souhaitée au sein d'un seuil ou d'une plage acceptable, ou varie au sein d'un seuil ou d'une plage acceptable, dans lequel
à mesure que la valeur de la sortie de puissance augmente, le système de circuits de traitement commande le système de refroidissement pour permettre à la température d'entrée cible de liquide de refroidissement d'être augmentée, et
le système de circuits de traitement est configuré pour augmenter une pression d'air au niveau d'un côté cathode de l'empilement de piles à combustible à mesure que la température d'entrée cible de liquide de refroidissement augmente.

2. Véhicule à pile à combustible selon la revendication 1, dans lequel le système de circuits de traitement du système de commande est configuré, en réponse à la valeur de la sortie de puissance étant au-dessus d'un niveau seuil, pour augmenter de manière réversible la valeur de la température d'entrée cible de liquide de refroidissement à un troisième niveau de température cible, dans lequel le troisième niveau de température cible est au-dessus du premier niveau de température cible et en dessous du deuxième niveau de température cible ou le troisième niveau de température cible est égal au deuxième niveau de température cible.

3. Véhicule à pile à combustible selon la revendication 1 ou 2, dans lequel la valeur de la sortie de puissance du système de pile à combustible est une valeur prédite de la sortie de puissance du système de pile à combustible.

4. Véhicule à pile à combustible selon la revendication 3, dans lequel la valeur prédite est obtenue en fonction de données sur un itinéraire attribué au véhicule.

5. Véhicule à pile à combustible selon l'une quelconque des revendications 1 à 4, dans lequel le système de circuits de traitement du système de commande est configuré pour optimiser la durée de temps pendant laquelle la valeur de la température cible est différente du premier niveau de température cible en utilisant un modèle de fonction de coût, et dans lequel le système de circuits de traitement est configuré pour appliquer le modèle de fonction de coût pour minimiser la durée de temps pendant laquelle la température cible est différente du premier niveau de température cible, tout en optimisant une valeur d'au moins un paramètre de la pluralité de paramètres se rapportant au fonctionnement du système de pile à combustible ; et/ou
dans lequel la pluralité de paramètres se rapportant au fonctionnement du système de pile à combustible comprennent un ou plusieurs parmi un niveau de dégradation du système de pile à combustible, une consommation en carburant par le système de pile à combustible, une charge auxiliaire, un rendement du système de pile à combustible, une puissance de l'empilement de piles à combustible, et un état de charge (SoC) d'un système d'accumulateur électrique (ESS) du véhicule à pile à combustible ; et/ou
dans lequel le premier niveau de température cible comprend 60 °C et le deuxième niveau de température cible comprend 80 °C, ou dans lequel le premier niveau de température cible comprend 60 °C et le deuxième niveau de température cible comprend 75 °C.

6. Procédé (700) de fonctionnement d'un système de pile à combustible comprenant un empilement de piles à combustible, le procédé comprenant :
l'obtention (702) d'une valeur de sortie de puissance du système de pile à combustible, la valeur de la sortie de puissance indiquant une demande de puissance par le système de pile à combustible pendant le fonctionnement du véhicule à pile à combustible ; et
l'ajustement répété (704) d'une valeur d'une température d'entrée cible de liquide de refroidissement du liquide de refroidissement au niveau d'une entrée de liquide de refroidissement de l'empilement de piles à combustible pour varier entre un premier niveau de température cible et un deuxième niveau de température cible qui est supérieur au premier niveau de température cible, en dépendance de la valeur de la sortie de puissance et de façon à minimiser une durée de temps pendant laquelle la température cible est différente du premier niveau de température cible de sorte qu'une valeur d'un ou plusieurs paramètres d'une pluralité de paramètres se rapportant au fonctionnement du système de pile à combustible est à une valeur souhaitée, ou s'écarte de la valeur souhaitée au sein d'un seuil ou d'une plage acceptable, ou varie au sein d'un seuil ou d'une plage acceptable, dans lequel le procédé comprend
à mesure que la valeur de la sortie de puissance augmente, la commande du système de refroidissement pour permettre à la température d'entrée cible de liquide de refroidissement d'être augmentée, et
l'augmentation d'une pression d'air au niveau d'un côté cathode de l'empilement de piles à combustible à mesure que la température d'entrée cible de liquide de refroidissement augmente.

7. Procédé selon la revendication 6, comprenant en outre, en réponse à la valeur de la sortie de puissance étant au-dessus d'un niveau seuil, l'augmentation de manière réversible de la valeur de la température d'entrée cible de liquide de refroidissement à un troisième niveau de température cible, dans lequel le troisième niveau de température cible est au-dessus du premier niveau de température cible et en dessous du deuxième niveau de température cible ou le troisième niveau de température cible est égal au deuxième niveau de température cible.

8. Procédé selon la revendication 6 ou 7, dans lequel la valeur de la sortie de puissance du système de pile à combustible est une valeur prédite de la sortie de puissance du système de pile à combustible.

9. Procédé selon l'une quelconque des revendications 6 à 8, dans lequel le procédé comprend l'optimisation de la durée de temps pendant laquelle la température cible est différente du premier niveau de température cible en utilisant un modèle de fonction de coût, et dans lequel le procédé comprend l'application du modèle de fonction de coût pour minimiser la durée de temps pendant laquelle la température cible est différente du premier niveau de température cible, tout en optimisant la valeur du ou des paramètres de la pluralité de paramètres se rapportant au fonctionnement du système de pile à combustible ; et/ou
dans lequel la pluralité de paramètres se rapportant au fonctionnement du système de pile à combustible comprennent un ou plusieurs parmi un niveau de dégradation du système de pile à combustible, une consommation en carburant par le système de pile à combustible, une charge auxiliaire, un rendement du système de pile à combustible, une puissance de l'empilement de piles à combustible, et un état de charge (SoC) d'un système d'accumulateur électrique (ESS) du véhicule à pile à combustible ; et/ou
dans lequel le premier niveau de température cible comprend 60 °C et le deuxième niveau de température cible comprend 80 °C, ou dans lequel le premier niveau de température cible comprend 60 °C et le deuxième niveau de température cible comprend 75 °C.

10. Système de commande (30) permettant de commander le système de pile à combustible (20) du véhicule à pile à combustible (10), le système de commande (30) comprenant un système de circuits de traitement configuré pour mettre en œuvre le procédé selon l'une quelconque des revendications 6 à 9.

11. Véhicule à pile à combustible (10) comprenant le système de commande (30) selon la revendication 10.

12. Produit programme informatique comprenant des instructions, qui, lorsqu'elles sont exécutées par un système de circuits de traitement, amènent le système de circuits de traitement à mettre en œuvre le procédé selon l'une quelconque des revendications 6 à 9.

13. Support de stockage lisible par ordinateur, sur lequel est stocké un produit programme informatique comprenant des instructions qui, lorsqu'elles sont exécutées par un système de circuits de traitement, amènent le système de circuits de traitement à mettre en œuvre le procédé selon l'une quelconque des revendications 6 à 9.
